# DEMANDE DE BREVET EUROPEEN

(11) **EP 2 204 301 A1**
(43) Date de publication de la demande: **07.07.2010**
(21) Numéro de dépôt: 09306140.6
(22) Date de dépôt: 26.11.2009
(51) Int. Cl.: B60K 35/00, B60K 31/00, B60K 31/18, G08G 1/0967

(54) **Système d'affichage d'informations de conduite concernant un véhicule et son environnement**

(30) Priorité: 16.12.2008 FR 0858625
(71) Demandeur: Renault S.A.S., 92100 Boulogne-Billancourt (FR)
(72) Inventeur: Forzy, Jean-François, 78470, SAINT REMY LES CHEVREUSE (FR)

(57) **Abrégé**

L'invention concerne un système d'affichage d'informations de conduite concernant un véhicule et son environnement, comprenant un écran (1) dans lequel est représentée une figure principale (5) correspondant au véhicule dont la représentation varie en fonction de la vitesse de ce dernier.

Selon l'invention, l'écran affiche une figure annexe (10, 11, 12) correspondant à un véhicule voisin quand un tel véhicule est détecté.

## Description

La présente invention concerne un système d'affichage d'informations de conduite concernant un véhicule et son environnement.

On connaît un tel système du type comprenant un écran dans lequel est représentée une figure correspondant au véhicule dont la représentation varie en fonction de la vitesse de ce dernier, par exemple d'après le document GB 2 278 320. Dans ce document, la figure géométrique change de forme et de couleur en fonction de la vitesse du véhicule porteur du système et de la distance le séparant du véhicule le précédant. Ainsi, la figure est un cercle vert, devenant, une ellipse orange si une première valeur seuil concernant la vitesse ou la distance est dépassée, puis soit une ellipse rouge plus aplatie ou un carré rouge, si une seconde valeur seuil est franchie.

De ce fait, le conducteur comprend l'aspect plus ou moins dangereux de l'environnement, et ceci de façon quasi instantanée du fait de la nature sub-symbolique du message qui ne requiert pas (ou très peu) de traitement cognitif, ce qui est particulièrement appréciable du fait de la concentration minimale requise pour conduire un véhicule.

Toutefois, la quantité d'information transmise est faible : au changement simultané de la couleur de remplissage et de la forme de la figure peut correspondre aussi bien une information sur la vitesse du véhicule que sur la distance de séparation avec le véhicule situé devant.

Le but de la présente invention est de fournir un nombre d'informations sur le véhicule porteur du système et sur son environnement proche beaucoup plus important sans toutefois demander une attention plus importante au conducteur.

Selon l'invention, dans le système d'affiche du type précité, l'écran affiche une figure annexe correspondant à un véhicule voisin quand un tel véhicule est détecté à une distance inférieure à une distance seuil.

Ainsi, selon l'invention, l'écran affiche, à l'aide de message sub-symboliques, plusieurs informations différentes : celles liées au véhicule porteur du systèmes sont représentées par la figure principale dont la représentation varie en fonction de la vitesse de ce dernier, et celles liées à un véhicule voisin sont représentées par une figure annexe, si un tel véhicule est détecté.

D'autres particularités et avantages de la présente invention apparaîtront dans la description d'un mode de réalisation donné à titre d'exemple non limitatif et illustré par les dessins mis en annexe dans lesquels :
La figure 1 est une représentation du champ de vision d'un conducteur d'un véhicule automobile et de l'emplacement d'un écran d'un système d'affichage conforme à la présente invention ;
La figure 2 est une représentation de l'écran du système d'affichage avec les différentes figures pouvant y apparaître ;
La figure 3 est une représentation de la figure principale lorsque le véhicule circule à une vitesse nettement inférieure à la vitesse maximale réglementaire ;
La figure 4 est une représentation de la figure principale lorsque le véhicule circule à une vitesse supérieure à la vitesse maximale réglementaire ;
La figure 5 est une représentation de la figure principale lorsque la vitesse du véhicule est calée, via un régulateur de vitesse, sur une vitesse donnée ;
La figure 6 est une représentation de la figure principale lorsque le véhicule fait un écart par rapport au centre de la voie sur laquelle il circule, sans en sortir ;
La figure 7 est une représentation de la figure principale lorsque le véhicule fait un écart par rapport au centre de la voie sur laquelle il circule, et en sort ;
La figure 8 est une représentation de l'écran quand le véhicule porteur du système s'approche d'une zone présentant une variation du réseau routier ; et
La figure 9 est une représentation de l'écran quand le véhicule porteur du système est à proximité immédiate d'une zone sujette à une vitesse maximale réglementaire inférieure à celle le concernant.

Un véhicule comprend un système d'affichage d'informations de conduite le concernant et concernant son environnement proche et lointain. Ce système d'affichage comprend un écran 1 où s'affichent différentes informations selon un mode sub-symbolique afin de permettre leur compréhension par le conducteur sans traitement cognitif. Par ailleurs, le système d'affichage est relié à différentes sources d'information provenant de différents systèmes intégrés au véhicule (dispositif de calcul de la vitesse du véhicule, régulateur de vitesse, dispositif radar permettant de détecter la présence d'un objet entrant dans le champ de vision et de calculer sa distance au véhicule, système GPS permettant de déterminer la position du véhicule sur le réseau routier et de déterminer les contraintes, telles que la vitesse maximale réglementaire, associées à cette position à partir d'une base de données).

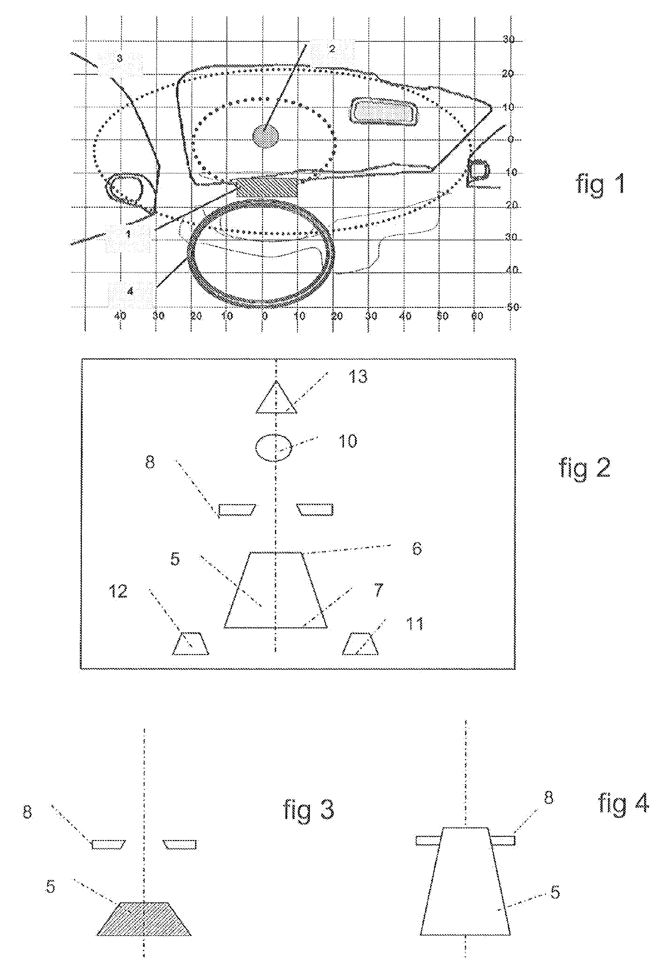

De préférence, afin, l'écran 1 est disposé en vision périphérique du conducteur par rapport au point d'expansion 2 de la scène visuelle externe. De ce fait, le conducteur n'a pas à détourner la tête pour comprendre les informations sub-symboliques s'affichant à l'écran 1. De préférence, l'écran 1 est situé sous le pare-brise 3, au-dessus du volant 4, dans l'axe du conducteur (cf. figure 1).

A l'écran 1, est représenté une figure principale 5 qui correspond au véhicule porteur du système d'affichage et dont la représentation varie en fonction de la vitesse de ce dernier. En l'occurrence, cette figure principale est un trapèze 5 qui est, ici, orienté de façon à avoir sa petite base 6 en haut et se grande base 7 (formant la base 7 de la figure principale 5) en bas opposé, les deux bases 6, 7 étant orientées horizontalement.

La hauteur de la figure principale 5 varie en fonction de la vitesse du véhicule porteur du système d'affichage. Par ailleurs, sa couleur de remplissage déborde si la vitesse du véhicule est supérieure à la vitesse maximale réglementaire (cf. figure 4), et ceci, de façon proportionnelle (dans le présent cas). En outre, afin de faciliter le traitement de l'information lié au dépassement ou non dépassement de la vitesse maximale réglementaire, dans le présent mode de réalisation, la couleur de remplissage varie en fonction du rapport de vitesses précité (ici, le remplissage est de couleur verte si la vitesse du véhicule est inférieure à la vitesse maximale réglementaire, et rouge dans le cas contraire).

A la figure principale 5 est associée une barre transversale 8 (horizontale) qui varie en fonction de la vitesse maximale réglementaire à laquelle est assujetti le véhicule porteur du système. De façon plus précise, la position de la barre transversale 8 par rapport à la base 7 de la figure principale 5 est proportionnelle à la vitesse maximale réglementaire, plus la vitesse maximale réglementaire est importante, plus la barre transversale 8 est positionnée dans le haut.

De plus, le véhicule porteur du système d'affichage étant muni d'un régulateur de vitesse, dans le présent mode de réalisation, les modifications de la représentation de la figure principale 5 liées à la vitesse réglementaire maximale (position de la barre transversale 8) et à la vitesse du véhicule (hauteur du trapèze 5 et couleur de remplissage) exposées ci-dessus n'ont lieu que lorsque le régulateur de vitesse est désactivé. En effet, dans le présent exemple, la représentation de la figure principale 5 varie en fonction de l'utilisation ou non de régulateur de vitesse. Ici, quand le régulateur de vitesse est activé, le contour de la figure principale 5 est renforcé, alors qu'il n'est pas marqué dans le cas inverse. Enfin, dans le présent mode de réalisation, quand le régulateur de vitesse de vitesse est activé, la petite base 6 du trapèze 5 est ajustée à la barre transversale 8 quand la vitesse du véhicule et la vitesse maximale réglementaire correspondent.

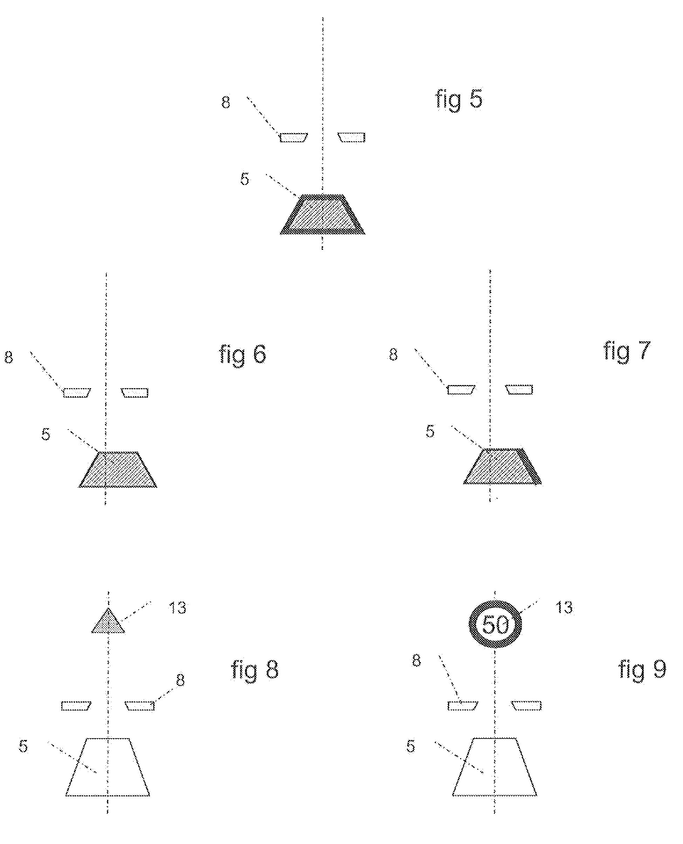

Enfin, en plus de l'information donnée au conducteur permettant un contrôle longitudinal du véhicule, le système d'affichage (ici, la figure principale 5) donne également une information permettant un contrôle transversal. Ainsi, la largeur de la grande base 7 de la figure principale 5 varie en fonction de la largeur de la voie sur laquelle circule le véhicule porteur du système (connu d'après la base de données liée au système GPS). De plus, la représentation de la figure principale 5 donne une information sur la position latérale du véhicule sur la voie : dans le présent mode de réalisation, la figure principale 5 est plus ou moins décalée horizontalement en fonction de la position du véhicule par rapport au centre de la voie sur laquelle il circule, comme illustré à la figure 6. En outre, dans le présent mode de réalisation, une sortie de voie (par exemple, un empiètement sur une bande d'arrêt d'urgence) est illustrée, outre le décalage horizontal, par une mise en surépaisseur (de couleur rouge) du bord correspondant 9 du contour de la figure principale 5 (cf. figure 7).

En outre, le système permet de donner également une information sur l'environnement du véhicule, toujours par des messages sub-symboliques.

Ainsi, l'écran 1 affiche une figure annexe 10, 11, 12 qui correspond à un véhicule voisin quand un tel véhicule est détecté. Ici, toutes les figures annexes 10, 11, 12 sont de taille inférieure à la figure principale 5.

En l'occurrence, l'écran affiche trois figures annexes : une figure annexe supérieure 10 (ici, un cercle 10) qui est disposée au-dessus de la figure principale 5 (ici, dans l'axe de cette dernière) et qui représente le véhicule précédant le véhicule porteur du système ; une figure annexe droite 11 (ici, un triangle 11) qui est disposée à droite de la figure principale 5 (ici, au niveau de la base 7 de cette dernière) et qui représente un véhicule circulant sur la voie de droite de celle sur laquelle circule le véhicule porteur du système, derrière ce véhicule ; et une figure annexe gauche 12 (ici, un triangle 12) qui est disposée à gauche de la figure principale 5 (ici, au niveau de la base 7 de cette dernière) et qui représente un véhicule circulant sur la voie située à gauche de celle sur laquelle circule le véhicule porteur du système, derrière ce véhicule (cf. figure 3). Afin de ne pas surcharger l'écran, et donc d'améliorer la transmission de l'information, dans le présent exemple, chaque figure annexe 10, 11, 12 n'est affichée que si le véhicule voisin est détecté à une distance inférieure à une distance seuil (par exemple, 30 m pour le véhicule précédant et 20 m pour les véhicules suiveurs).

En outre, afin d'apporter des précisions, ici, la représentation de chaque figure annexe 10, 11, 12 (ici, sa couleur de remplissage) varie en fonction de la distance ou de l'intervalle de temps séparant le véhicule voisin du véhicule porteur du système. Ainsi, pour la figure annexe supérieure 10, le remplissage est de couleur verte si l'intervalle de temps est supérieur à une première valeur de sécurité (par exemple, 2 s), de couleur organe s'il est inférieur à cette première valeur de sécurité mais supérieur à une seconde valeur de sécurité (par exemple 1 s), et rouge si l'intervalle de temps est inférieur à la seconde valeur de sécurité. De même pour les figures annexes droite 11 et gauche 12, il n'y a pas de remplissage si l'intervalle de temps est supérieur à une première valeur de sécurité (par exemple, 10 m), le remplissage est de couleur verte de couleur s'il est inférieur à cette première valeur de sécurité mais supérieur à une seconde valeur de sécurité (par exemple 5 m), et rouge si l'intervalle de temps est inférieur à la seconde valeur de sécurité.

Enfin, l'écran 1 affiche une figure supplémentaire 13 qui correspond à l'approche d'une zone du réseau routier présentant une variation des contraintes de conduite (ici, aussi bien une variation défavorable comme une diminution de la vitesse réglementaire, une diminution du nombre de voies, la présence d'une intersection, d'un virage dangereux, d'un passage pour piétons ou d'un radar fixe, qu'une variation favorable comme une augmentation de la vitesse réglementaire ou une augmentation du nombre de voies). Ici, la figure supplémentaire 13 (un triangle 13) est de taille inférieure à la figure principale 5. En l'occurrence, la figure supplémentaire 13 est disposée au-dessus de la figure centrale 5 (ici, dans l'axe de cette dernière), et, de façon plus précise, au-dessus de la figure annexe supérieure 10. Pour les mêmes raisons que celles indiquées pour les figures annexes 10, 11, 12, la figure supplémentaire 13 n'est affichée que si la zone est détectée à une distance inférieure à une distance seuil.

En outre, afin d'apporter des précisions, ici, la représentation de la figure supplémentaire 13 varie en fonction de la distance ou de l'intervalle de temps séparant la zone présentant une variation des contraintes de conduite du véhicule porteur du système. De plus, dans le présent mode de réalisation, la représentation varie également en fonction de la vitesse du véhicule porteur du système et de la nature de la variation. Dans le présent exemple, la figure supplémentaire 13 est une représentation du panneau de signalisation routière correspondant à la variation du paramètre de contrainte si le véhicule est à proximité immédiate de la zone, comme illustré à la figure 9 (ou, dans le cas d'une augmentation de la vitesse maximale réglementaire, un rectangle, ayant ici un remplissage de couleur bleu), et une figure géométrique simple (ici un triangle) ayant un remplissage coloré (bleu dans le cas d'une variation favorable, orange dans le cas contraire) si le véhicule n'a pas atteint la limite de la proximité immédiate. La distance seuil et la limite de la proximité immédiate sont différentes selon la nature de la variation de contraintes et l'allure du véhicule, par exemple, la distance seuil pour un abaissement de la vitesse maximale réglementaire peut être de 200 m si le véhicule circule à une vitesse supérieure à 70 km/h, et la limite de la proximité immédiate pour la même contrainte peut être de 100 m indépendamment de la vitesse du véhicule. L'utilisation, dans un premier temps, d'une première information n'indiquant que la présence d'une zone à changement de contrainte, sans indiquer la nature de ce changement, permet un meilleur traitement de l'information par le conducteur.

Par le présent système d'affichage, le conducteur dispose d'un nombre très important d'informations ne nécessitant pas d'un traitement cognitif, lui permettant d'anticiper, sans être distrait. A chaque modification d'une représentation à l'écran correspond une information qui lui est propre.

La présente invention n'est pas limitée au présent mode de réalisation.

Il serait ainsi possible que le système ne puisse afficher que la figure principale (éventuellement sans présenter toutes les informations mentionnées - vitesse maximale réglementaire, vitesse du véhicule, usage d'un régulateur de vitesse, écart transversal du véhicule - ou en les présentant d'une manière différente), ou la figure principale accompagnée uniquement d'une ou de plusieurs figures parmi les trois figures annexes et la figure supplémentaire. Il serait également possible que chacune des figures annexes et la figure supplémentaire (quand elles sont implémentées au système d'affichage) ne présente pas toutes les informations mentionnées la concernant, ou les présente d'une manière différente.

## Revendications

1. Système d'affichage d'informations de conduite concernant un véhicule et son environnement, comprenant un écran (1) dans lequel est représentée une figure principale (5) correspondant au véhicule dont la représentation varie en fonction de la vitesse de ce dernier, **caractérisé en ce que** l'écran affiche une figure annexe (10, 11, 12) correspondant à un véhicule voisin quand un tel véhicule est détecté.

2. système d'affichage selon la revendication 1, **caractérisé en ce que** la figure annexe (10, 11, 12) n'est affichée que si le véhicule voisin est détecté à une distance inférieure à une distance seuil.

3. Système d'affichage selon la revendication 1 ou 2, **caractérisé en ce que** la couleur de remplissage de la figure annexe (10, 11, 12) varie en fonction de l'intervalle de temps séparant le véhicule voisin du véhicule porteur du système.

4. Système d'affichage selon l'une des revendications 1 à 3, **caractérisé en ce que** l'écran affiche une figure annexe droite (11), disposée à droite de la figure principale (5), représentant un véhicule circulant sur la voie située à droite de celle sur laquelle circule le véhicule porteur du système, derrière ce véhicule.

5. Système d'affichage selon l'une des revendications 1 à 4, **caractérisé en ce que** l'écran affiche une figure annexe gauche (12), disposée à gauche de la figure principale (5), représentant un véhicule circulant sur la voie située à gauche de celle sur laquelle circule le véhicule porteur du système, derrière ce véhicule.

6. Système d'affichage selon l'une des revendications 1 à 5, **caractérisé en ce que** l'écran (1) affiche une figure annexe supérieure (10), disposée au-dessus de la figure principale (5), représentant le véhicule précédant le véhicule porteur du système.

7. Système d'affichage selon l'une des revendications 1 à 6, **caractérisé en ce que** l'écran (1) affiche une figure supplémentaire (13), disposée au-dessus de la figure centrale (5), correspondant à l'approche d'une zone du réseau routier présentant une variation des contraintes de conduite.

8. Système d'affichage selon la revendication 7, **caractérisé en ce que** la figure supplémentaire (13) n'est affichée que si la zone est détectée à une distance inférieure à une distance seuil.

9. Système d'affichage selon la revendication 7 ou 8 dépendante de la revendication 6, **caractérisé en ce que** la figure supplémentaire (13) est située au-dessus de la figure annexe supérieure (10).

10. Système d'affichage selon l'une des revendications 7 à 9, **caractérisé en ce que** la représentation de la figure supplémentaire (13) varie selon la distance séparant le véhicule porteur du système à la zone présentant une variation des contraintes.

11. Système d'affichage selon la revendication 10, **caractérisé en ce que** la figure supplémentaire (13) est une représentation du panneau de signalisation routière correspondant à la variation de contrainte si le véhicule porteur du système est à une distance inférieure à une limite de proximité immédiate, et une figure géométrique ayant un remplissage coloré et dans le cas contraire.

12. Système d'affichage selon l'une des revendications 1 à 11, **caractérisé en ce qu'**une barre transversale (8) est associée à la figure principale (5), la position verticale de cette barre (5) par rapport à la base (7) de la figure principale (5) variant en fonction de la vitesse maximale réglementaire à laquelle est assujetti le véhicule porteur du système.

13. Système d'affichage selon l'une des revendications 1 à 12, **caractérisé en ce que** la hauteur de la figure principale (5) varie en fonction de la vitesse du véhicule porteur du système.

14. Système d'affichage selon la revendication 13 dépendante de la revendication 12, **caractérisé en ce que** l'extrémité supérieure (6) de la figure principale (5) atteint la barre transversale (8) quand la vitesse du véhicule porteur du système correspond à la vitesse maximale réglementaire à laquelle est assujetti le véhicule.

15. Système d'affichage selon l'une des revendications 1 à 14, **caractérisé en ce que** la couleur du remplissage de la figure principale (5) varie en fonction du rapport de la vitesse du véhicule porteur du système sur la vitesse maximale réglementaire.

16. Système d'affichage selon la revendication 15, **caractérisé en ce que** le remplissage de la figure principale (5) déborde si la vitesse du véhicule du véhicule porteur est supérieure à la vitesse maximale réglementaire.

17. Système d'affichage selon l'une des revendications 1 à 16, **caractérisé en ce que** la représentation de la figure principale (5) varie en fonction de l'activation ou non d'un régulateur de vitesse.

18. Système d'affichage selon la revendication 16, **caractérisé en ce que**, quand le régulateur de vitesse est désactivé, le système d'affichage est conforme à l'une des revendications 12 à 16.

19. Système d'affichage selon la revendication 18, **caractérisé en ce que**, quand le régulateur de vitesse est activé, le contour de la figure principale (5) est renforcé par rapport au contour en cas de désactivation du régulateur.

20. Système d'affichage selon l'une des revendications 1 à 19, **caractérisé en ce que** la largeur de la base (7) de la figure principale (5) varie en fonction de la largeur de la voie sur laquelle circule le véhicule porteur du système

21. Système d'affichage selon l'une des revendications 1 à 20, **caractérisé en ce que** la position horizontale de la figure principale (5) varie en fonction de la position transversale du véhicule porteur du système sur la voie.

22. Système d'affichage selon l'une des revendications 1 à 21, **caractérisé en ce que** l'écran (1) est disposé en vision périphérique du conducteur par rapport au point d'expansion (2) de la scène visuelle externe, sous le pare-brise (3), au-dessus du volant (4), dans l'axe du conducteur.
